# EUROPEAN PATENT APPLICATION

(11) **EP 4 535 654 A1**
(43) Date of publication of application: **09.04.2025**
(21) Application number: 23811811.1
(22) Date of filing: 23.05.2023
(51) Int. Cl.: H02S 50/00

(54) **POWER GENERATION UNIT**

(30) Priority: 27.05.2022 JP 2022086907
(71) Applicant: NTN Corporation, Osaka-shi Osaka 530-0005 (JP)
(72) Inventor: ONO, Kouhei, Kuwana-shi, Mie 511-0867 (JP)
(74) Representative: Maikowski & Ninnemann Patentanwälte Partnerschaft mbB
(86) International application number: PCT/JP2023/019127
(87) International publication number: WO 2023/228939

(57) **Abstract**

Provided is a power generation unit (1) which can include a natural energy power generator device that includes solar panels (4a, 4b), and a power supply device (6) configured to supply an electrical device (5) with power generated by the natural energy power generator device. The solar panels can include a first solar panel (4a) disposed on a portion of a structure and a second solar panel (4b) disposed on another portion of the structure. The power supply device (6) can include a switch (11) configured to permit switching between a first switching mode in which both the first and second solar panels (4a, 4b) are operative and a second switching mode in which one or the other of the first and second solar panels (4a, 4b) is operative.

## Description

### CROSS REFERENCE TO THE RELATED APPLICATION

This application is based on and claims Convention priority to a Japanese patent application No. 2022-086907 filed May 27, 2022, the entire disclosure of which is herein incorporated by reference as a part of this application.

### BACKGROUND OF THE INVENTION

### (Field of the Invention)

The present invention relates to a power generation unit which comprises, among other things, a natural energy power generator device that includes solar panels.

### (Description of Related Art)

Modular houses, container houses, and other such structures are transportable and can be temporarily installed in places such as construction sites where little or no infrastructure is installed. Since there is no power supply available from a power grid in places with little or no infrastructure installed, the structures need to be furnished with a natural energy power generator device such as a wind turbine generator or a solar panel to obtain power supply. It is contemplated to dispose solar panels, for example, on the roof surface and side surfaces of a cuboidal structure (Patent Document 1).

### [Related Document]

### [Patent Document]

[Patent Document 1] JP Laid-open Patent Publication No. 2021-035181

### SUMMARY OF THE INVENTION

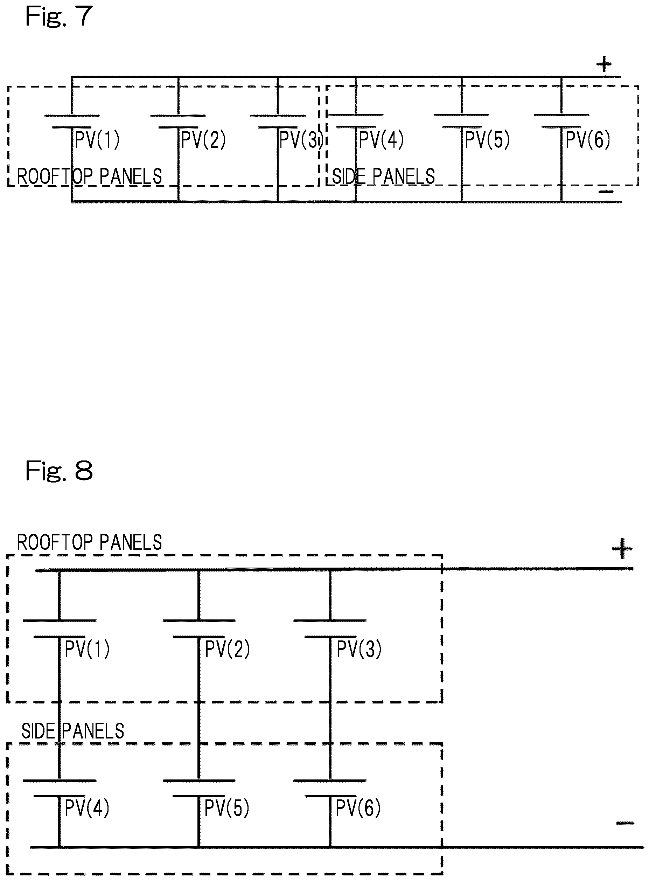

For example, such a structure with solar panels may be set up in mountainous areas with little or no infrastructure installed. When snow falls in mountainous areas in winter, those solar panels (or "rooftop panels") disposed on the roof surface of the structure would be covered with snow. All of the solar panels on the roof surface and on the side surfaces could be connected in parallel with each other as in Fig. 7. However, this parallel connection is often avoided because there tends to be a gap in power generation and, therefore, an imbalance in power generation between rooftop panels PV(1), PV(2), PV(3) and solar panels PV(4), PV(5), PV(6) (or "side panels") disposed on the side surfaces.

In such a case, the rooftop panels PV(1), PV(2), PV(3) and the side panels PV(4), PV(5), PV(6) are often connected in series as in Fig. 8 to provide a connection that is less likely to have an imbalance of power generation among different parallel paths. Yet, when snow falls and covers the rooftop panels PV(1), PV(2), PV(3), not only the power generation of the rooftop panels PV(1), PV(2), PV(3) is hindered, but the power generation of the side panels PV(4), PV(5), PV(6) is also affected.

An object of the present invention is to provide a power generation unit with solar panels, which achieves improved energy production and in which hinderance of the power generation of a subset of the solar panels does not affect the power generation of the rest of the solar panels.

A power generation unit according to the present invention includes: solar panels including a first solar panel disposed on a portion of a structure and a second solar panel disposed on another portion of the structure or in the vicinity of the structure; and a power supply device configured to supply an electrical device with power generated by the solar panels, wherein the power supply device includes a panel switch mechanism configured to permit switching between a first switching mode in which both the first and second solar panels are operative and a second switching mode in which one or the other of the first and second solar panels is operative.

According to this configuration, the provision of the first and second solar panels and the operation in the first switching mode in which both the first and second solar panels are operative allow more energy to be produced than, for example, a configuration in which solar panels are disposed only on a single portion of the structure. When the power generation of either one of the first and second solar panels is hindered as a result of snow cover or other causes, the power generation unit can be switched into the second switching mode in which the other of the first and the second solar panels remains operative, in order to carry out power generation.

The power supply device may be configured to control the panel switch mechanism to carry out switching to the second switching mode, if a switching trigger condition is met on the basis of a prescribed detecting output when the power generation unit is in the first switching mode.

The detecting output is intended to mean a sensor value of various sensor(s) or a snowfall schedule that is preset on a timer, etc.

The switching trigger condition is a condition that is defined as desired according to design factors, etc., and is optimally determined and set through at least one of testing or simulation, for example.

The switching modes can be automatically switched on the basis of the detecting output without human intervention, so that usability can be improved.

The power supply device may be configured to control the panel switch mechanism to carry out switching to the first switching mode, if a resuming condition is met on the basis of a prescribed detecting output when the power generation unit is in the second switching mode.

The detecting output is intended to mean a sensor value of various sensor(s) or a snowfall schedule that is preset on a timer, etc.

The resuming condition is a condition that is defined as desired according to design factors, etc., and is optimally determined and set through at least one of testing or simulation, for example.

In this case, the power generation unit can be automatically switched back to the first switching mode on the basis of the detecting output, so that the power generation capacity of the solar panels can be fully utilized.

The panel switch mechanism may include a switch configured to permit manual switching between the first and second switching modes. The first and second switching modes can be manually switched in case a problem occurs in the detecting output to switch between the switching modes, so that the power generation capacity of the solar panels can be exploited to the maximum extent.

According to a power generation unit of the present invention, the power supply device includes a panel switch mechanism configured to permit switching between the first switching mode in which both the first and second solar panels are operative and the second switching mode in which one or the other of the first and second solar panels is operative. Thus, improved energy production is achieved. Further, even when the power generation of part of the solar panels is hindered, power generation can still be carried out using the rest of the solar panels.

Any combinations of at least two features disclosed in the claims and/or the specification and/or the drawings should also be construed as encompassed by the present invention. Especially, any combinations of two or more of the claims should also be construed as encompassed by the present invention.

### BRIEF DESCRIPTION OF THE DRAWINGS

The present invention will be more clearly understood from the following description of preferred embodiments made with reference to the accompanying drawings. However, the embodiments and the drawings are given merely for the purpose of illustration and explanation, and should not be used to delimit the scope of the present invention, which scope is to be delimited by the appended claims. In the accompanying drawings, alike numerals are assigned to and indicate alike parts throughout the different figures, and:
Fig. 1 shows a perspective view of a power generation unit according to a first embodiment of the present invention;
Fig. 2 shows a switching circuit for solar panels of the power generation unit;
Fig. 3 shows a block diagram illustrating detection of the presence or absence of snow cover on the power generation unit;
Fig. 4 shows a flowchart that illustrates a switching trigger condition and the like for switching between switching modes in the power generation unit;
Fig. 5 shows a perspective view of a power generation unit according to a second embodiment of the present invention;
Fig. 6 shows a perspective view of a power generation unit according to a third embodiment of the present invention;
Fig. 7 shows a diagram illustrating a parallel connection of solar panels; and
Fig. 8 shows a diagram illustrating a series connection of solar panels.

### DESCRIPTION OF EMBODIMENTS

### [First Embodiment]

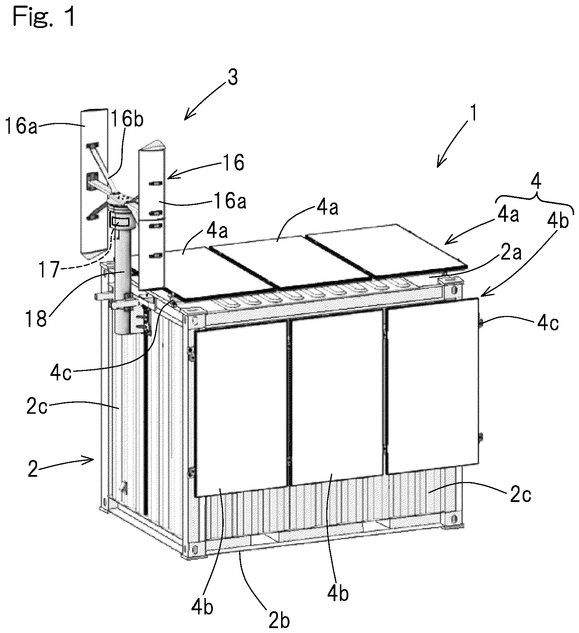

A power generation unit according to an embodiment of the present invention will be described in connection with Figs. 1 to 4.

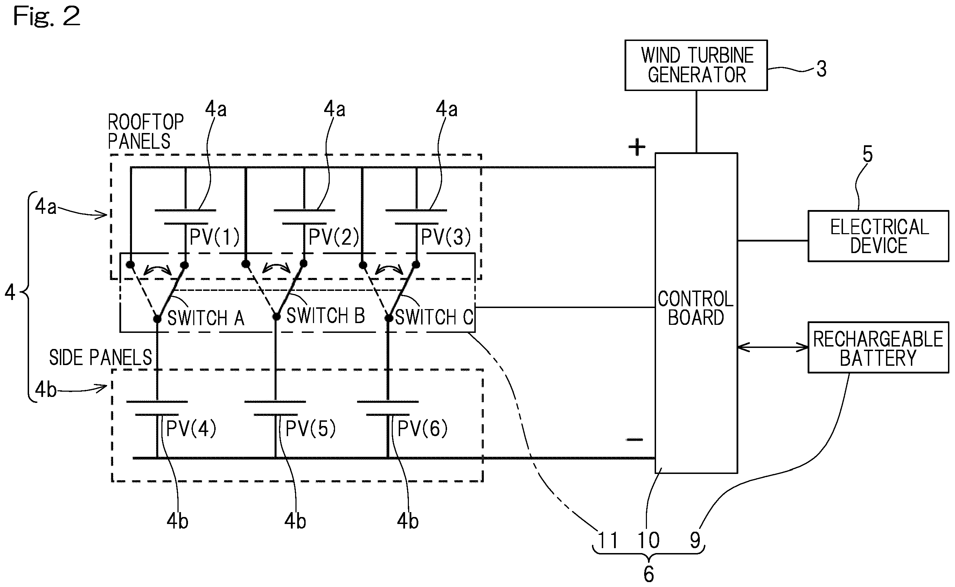

Referring to Fig. 1, the power generation unit 1 according to the embodiment includes a structure 2, a wind turbine generator 3 and photovoltaic generator 4, both of which are natural energy power generator devices, an electrical device 5 shown in Fig. 2, and a power supply device 6 configured to supply the electrical device 5 with power generated by the natural energy power generator devices. The structure 2 of Fig. 1 is shaped like a container which is configured in a transportable manner, equipped with the electrical device 5 (Fig. 2), and provides an interior space for at least one of a residence, an office, a workshop, a rest spot, a shop, a charging station, a storehouse, a parking station, and medical practice.

### <Structure>

The structure 2 is generally formed in a substantially cuboidal shape with a generally rectangular top wall 2a and a generally rectangular bottom wall 2b and four peripheral walls 2c arranged between the top wall 2a and the bottom wall 2b. At least one of the peripheral walls 2c of the structure 2 is provided with a door (not shown) through which a person can enter or exit the space, a window that can be opened and closed, etc. In the instant embodiment, the structure 2 has no propelling drive source equipped thereto to let it travel on its own, but can be moved by being carried by an external means of transportation, etc.

For example, the structure 2 comprises a shipping container or a modular house. The shipping container is preferably a container having dimensions that comply with a standard for freight transport containers, including, for example, a domestic standard for container transport. For instance, the "standard" in this context may be a standard established by a domestic administrative agency or an international organization such as the International Organization for Standardization (ISO). It may even be a de-facto standard established by JR containers for railroad freight transport containers in Japan. Alternatively, the dimensions of such a container may be modified so that it can be loaded on the truck bed of a conventional freight transport truck.

The structure 2 configured with a shipping container can be transferred with various means of transportation such as truck, railroad, ship, and airplane and be deployed off the vehicle using a crane (not shown), etc. By exhibiting an excellent rigidity, the shipping container can protect interior devices and other items against potential malfunctions caused by vibrations and impacts during transportation. For instance, the interior space of the structure 2 can house the electrical device 5 (Fig. 2), examples of which include an indoor unit of an air conditioner, an illumination device, and an office machine such as a printer. It should be understood that an outdoor unit (not shown) of the air conditioner, etc. also corresponds to the electrical device 5 (Fig. 2), even though it is often disposed, for example, externally to the peripheral walls 2c of the structure 2.

### <Wind Turbine Generator>

The wind turbine generator 3 includes a wind turbine 16 and a generator 17 configured to be driven with the wind turbine 16 to generate power. The wind turbine 16 is configured as a vertical-axis wind turbine. More specifically, the wind turbine 16 includes a plurality of blades 16a (or two blades in the instant example) and a blade support 16b providing support to the blades 16a. Each of the blades 16a extends in a vertical direction, and the blade support 16b is rotatably supported about a vertical axis at the upper end of a tower 18 through a bearing arrangement (not shown). The two blades 16a are disposed at positions angularly spaced apart by 180 degrees about the axis of the tower 18. The tower 18 is supported centrally on the upper part of one of the peripheral walls 2c of the structure 2.

### <Photovoltaic Generator>

The photovoltaic generator 4 includes first and second solar panels 4a, 4b configured to receive sunlight for photoelectric conversion and panel mounts 4c with which the first and second solar panels 4a, 4b are mounted to the structure 2. In the instant example, a plurality of the first solar panels 4a (or three first solar panels in the instant example) are disposed through one or more of the panel mounts 4c on a portion of the structure 2, namely, the top wall 2a. A plurality of the second solar panels 4b (or three second solar panels in the instant example) are disposed through one or more of the panel mounts 4c on a different portion of the structure 2, namely, one of the peripheral walls 2c. The first and second solar panels 4a, 4b and the panel mounts 4c are, for example, stored inside the structure 2 for transportation and assembled at the installation site.

### <Ideas for Installation of Solar Panels>

The ideas employed in the instant power generation unit 1 for installation of the solar panels will be presented. The panel angles, that is, elevation angles of the first solar panels 4a (or "rooftop panels") disposed on the top wall 2a are set to 0 degree in consideration of suppressing wind loads and resulting softening of strength requirements for the panel mounts 4c and the structure 2 and in view of possible interference with other relevant structures during transportation, etc. Although the elevation angles of the rooftop panels 4a are typically 0 degree, they can alternatively be slightly tilted.

Meanwhile, the second solar panels 4b (or "side panels") are disposed on one of the peripheral walls 2c at elevation angles of 90 degrees. Aside from the effective exploitation of the side surfaces of a modular house or container, the elevation angles of 90 degrees at which the side panels 4b are disposed are also advantageous because it increases power produced in winter. Especially during the winter when the sun path is lower, the contribution of the side panels 4b to energy production is often higher than that of the panels on the roof surface. Because a power demand of modular houses and the like remains constant throughout the year, modular houses and the like running on natural energy often suffer from serious shortage in energy produced in the winter where less solar radiation is available. In this regard, the side panels 4b are quite beneficial.

Table 1 shows the overall comparison between the rooftop panels 4a and the side panels 4b.

**[Table 1]**

| | Advantages | Disadvantages |
|---|---|---|
| Rooftop panels (elevation angle: 0°) | - Less wind load. | - Snow cover when there is snow fall. |
| | - No interference with wind turbine or with other structures during transportation. | |
| Side panels (elevation angle: 90°) | - No effect on wind load because the load depends on projected area of container. | - Less power generated in summer. (This has a minor impact thanks to compensation by power generation of rooftop panels in summer.) |
| | - Increase in power generated in winter. | |
| | - Effective exploitation of otherwise unused spaces. | |

### <Power Supply Device>

Referring to Fig. 2, the power supply device 6 includes a rechargeable battery 9, a control board 10, and switches 11 serving as a panel switch mechanism. The rechargeable battery 9 stores power generated by the wind turbine generator 3 and/or the photovoltaic generator 4. The control board 10 is responsible for controlling the power generation by the wind and photovoltaic generators 3, 4 as well as controllably directing power generated by the wind and photovoltaic generators 3, 4 into the rechargeable battery 9 and out of the rechargeable battery 9 into the electrical device 5. The control board 10 comprises a computer, a program for execution by the computer, and various electronic circuits, among other things. For example, the control board 10 includes, in particular, an AC to DC converter configured to convert AC power generated by the wind turbine generator 3 into DC power with a voltage at which the rechargeable battery 9 can be charged, and an inverter configured to transform the power stored in the rechargeable battery 9 into AC power with a sinusoidal waveform similar to the AC mains power or with a square waveform

The plurality of rooftop panels 4a are connected in parallel with each other, and the plurality of side panels 4b are connected in parallel with each other. Each member (PV(1), PV(2), PV(3)) of the plurality of rooftop panels 4a is connected in series with a respective one of the members (PV(4), PV(5), PV(6)) of the plurality of side panels 4b through a corresponding one of switches A, B, C, which are the switches 11. These panels 4a, 4b are electrically connected to the control board 10.

The switches 11 are configured to permit switching between a first switching mode in which both the rooftop panels 4a and side panels 4b are operative (i.e., when the switches A, B, C are in a state indicated with solid lines in Fig. 2) and a second switching mode in which only the side panels 4b are operative (i.e., when the switches A, B, C are in a state indicated with broken lines in Fig. 2). The switches 11 are configured to permit manual switching and/or automated switching (as will be described later) between the first and second switching modes. The switching modes can also be referred to as "circuit configurations."

In the first switching mode, snow cover, if any, on the rooftop panels 4a should be detected so that switching into the second switching mode can be performed in which only the side panels 4b are operative. On the other hand, after the switching to the second switching mode is made, the disappearance of snow cover on the rooftop panels 4a should be detected to return to the previous first switching mode.

### <Block Diagram of Snow Cover Detection Operations>

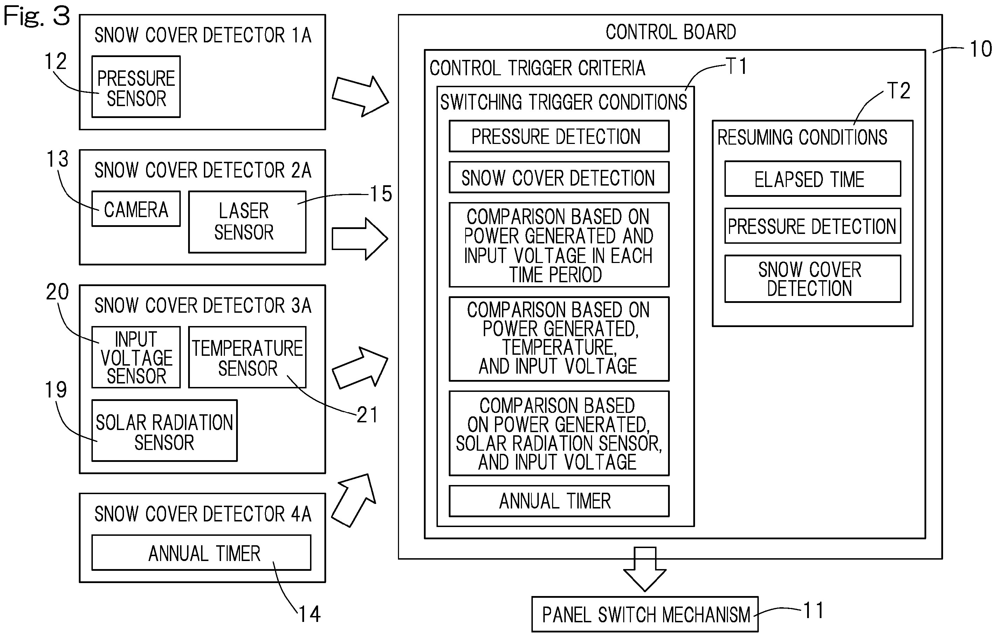

Referring to Fig. 3, examples of possible ways to detect snow cover may include a snow cover detector 1A which comprises a pressure sensor 12 to determine the pressure of snow cover, a snow cover detector 2A which comprises a camera 13 and/or other component(s) to monitor snow cover, a snow cover detector 3A that determines the presence or absence of snow cover on the basis of power data, and a snow cover detector 4A which comprises an annual timer 14 on the basis of which to determine the presence or absence of snow cover. Applicable examples of the pressure sensor 12 of the snow cover detector 1A may include various pressure sensor designs such as strain gauge, thin film, and capacitive configurations and will be disposed on the back surfaces of the panels. The snow cover detector 2A directly checks the presence or absence of snow by means of, for example, the camera 13 or an infrared or laser sensor 15. The snow cover detector 3A performs computations by comparing the results of a solar radiation sensor 19 and power generated, the relationship between time and the input voltage sensed by an input voltage sensor 20, and/or the relationship between time and the panel temperature sensed by a temperature sensor 21.

Sensed values of the various sensor(s) or an annual snowfall schedule preset on the annual timer 14 represents a detecting output and is transmitted to the control board 10 in order to carry out the operation to switch between the first and second switching modes. The control board 10 is configured to control the switches 11 to carry out switching to the second switching mode, if a switching trigger condition T1 is met on the basis of a prescribed detecting output when the power generation unit in the first switching mode. The timing of switching between the switching modes may be in the daytime, or even in the nighttime or other particular time period(s), for example, once detection has been made with the various sensor(s). By thus restricting the timing of switching between the switching modes to nighttime or other particular time period(s), a switching operation can be carried out, for example, without jeopardizing the usability of the structure for people engaging in activities in the structure in the daytime. By employing the preset annual snowfall schedule, switching between the switching modes can be performed without relying on sensed values.

Direct determination of snow cover, or elapse of time can be used as the effective basis for a resuming condition T2 to go back from the second switching mode to the first switching mode. The control board 10 is configured to control the switches 11 to carry out switching to the first switching mode, that is, the normal mode, if the resuming condition T2 is met on the basis of a prescribed detecting output when the power generation unit in the second switching mode. For example, when the sensed value of the pressure sensor 12 is used as the prescribed detecting output, the control board 10 determines that the resuming condition is met once the sensed value indicative of pressure drops down to the threshold or below to conclude that the snow cover has disappeared, and causes switching into the normal mode. In this way, switching to the second switching mode can be carried out when there is snow cover, and the normal mode can be resumed when there is no snow cover.

### <Flowchart of Switching Trigger Condition and the like>

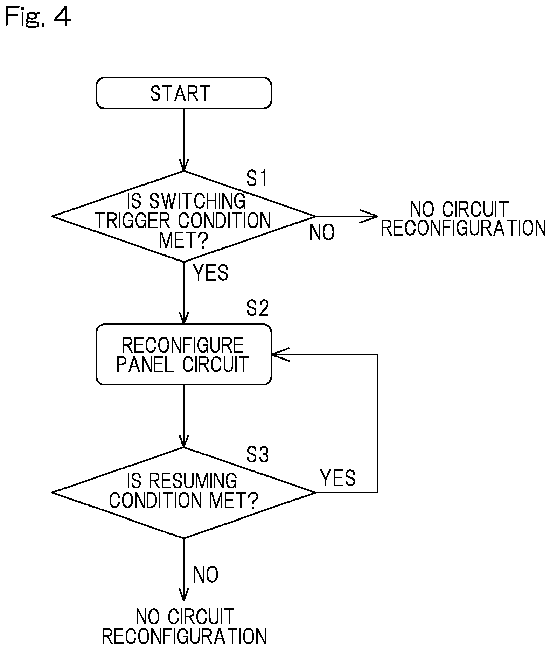

Referring to Fig. 4, after the start of the process, the control board 10 (Fig. 3) determines whether the switching trigger condition is met when the power generation unit in the first switching mode (at step S1). If the switching trigger condition is not met (NO at step S1), no circuit reconfiguration is made, and the first switching mode, namely, the normal mode is therefore maintained. If the switching trigger condition is met (YES at step S1), the control board 10 (Fig. 3) reconfigures the panel circuit from the first switching mode into the second switching mode (at step S2). Next, once the control board 10 (Fig. 3) determines that the resuming condition is met (YES at step S3), the control board 10 performs switching from the second switching mode back into the first switching mode. At step S3, if the control board 10 (Fig. 3) determines that the resuming condition is not met (NO at step S3), no circuit reconfiguration is made, and the second switching mode is maintained.

### <Effects and Benefits>

According to the power generation unit 1 of Fig. 1 which has been described thus far, the provision of the rooftop panels 4a and the side panels 4b and the operation in the first switching mode in which both of these panels are operative allow more energy to be produced than, for example, a configuration in which only the rooftop panels are deployed. When the power generation of the rooftop panels 4a is hindered as a result of snow cover or other causes, the power generation unit can be switched into the second switching mode in which only the side panels 4b remain operative, in order to carry out power generation. The power generation unit can be switched back to the first switching mode, namely, the normal mode using the switches 11 of Fig. 2, if the resuming condition is met on the basis of a prescribed detecting output when the power generation unit in the second switching mode, so that the power generation capacity of the solar panels 4 can be fully utilized.

### <Further Embodiments>

In the following description, features corresponding to those previously described with respect to different embodiments are numbered similarly and will not be described to avoid redundant discussions. Where only a subset or part of features are described, the rest of the features should be regarded as analogous to those of the preceding embodiment(s) unless otherwise noted. Identical features produce identical effects and benefits. In addition to particular combinations of features described with respect to various embodiments, the embodiments themselves can be partially combined with each other, unless such combinations are found to be inoperable.

### [Second Embodiment: On-field Solar Panels]

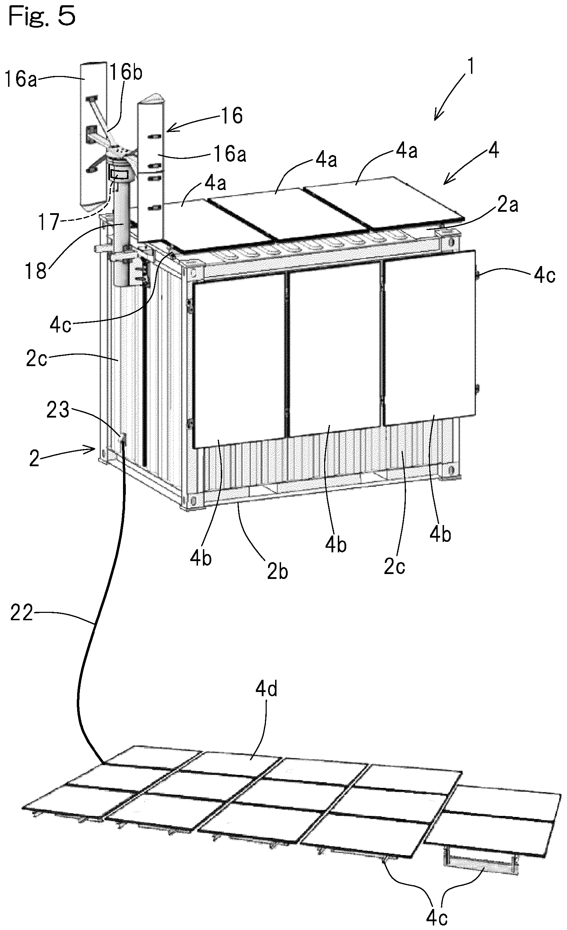

Referring to Fig. 5, solar panels 4d may be disposed in the vicinity of the structure 2. The solar panels 4d are so-called on-field solar panels 4d installed on the ground through panel mounts 4c and are configured to be connectable to and disconnectable from an electrical connector 23 of the structure 2 through a power cable 22. The electrical connector 23 is electrically connected to the control board 10 (Fig. 3). The switches 11 (see Fig. 2) are used to switch between a first switching mode, namely, the normal mode in which all of the rooftop panels 4a, the side panels 4b, and the on-field solar panels 4d are operative and a second switching mode in which either only the side panels 4b and the on-field solar panels 4d or only the side panels 4b are operative. Although not shown, the on-field solar panels may be deployed in place of the rooftop panels 4a.

### [Third Embodiment: Power Grid Supply with No Wind Turbine]

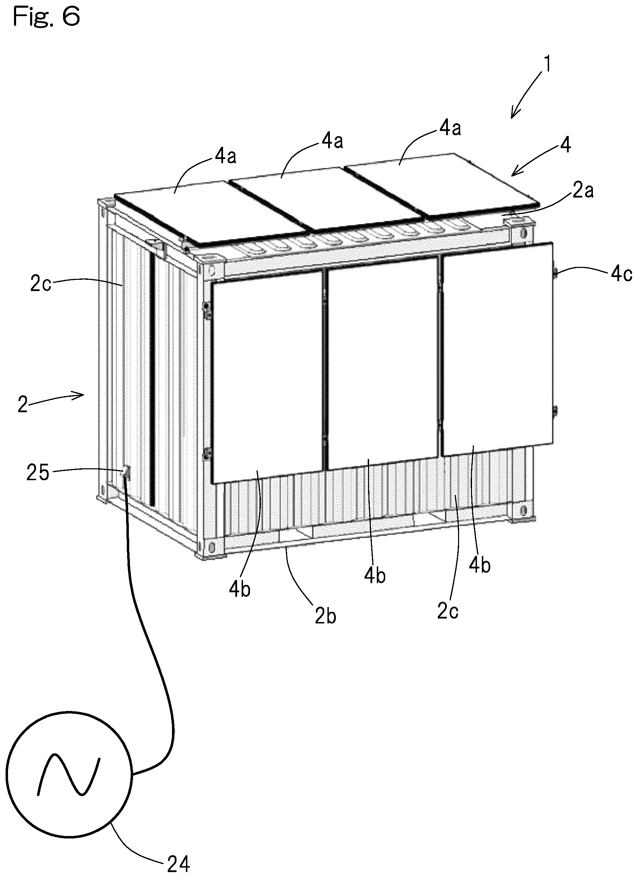

Referring to Fig. 6, the solar panels 4 may be the only natural energy power generator device provided to the structure 2. The power supply device may include a power grid connector 25 to receive power supply from a power grid 24. The power grid connector 25 may also be provided in the aforementioned first and second embodiments.

The switches serving as a panel switch mechanism may be configured to permit only manual switching between the switching modes or permit only automated switching between the switching modes.

In addition to snow cover, the examples of matter that can accumulate on and hinder the power generation of the solar panels include flying objects such as fallen leaves and dust.

Instead of the shipping container, the structure can comprise any simple movable structure.

### <Proposed Reference Example>

One proposed reference example is conceivable in which the first and second solar panels are both disposed at a certain location different from the structure. For example, it can be contemplated that, when the first and second solar panels are on-field panels, any one of the first or second solar panels could be covered with snow depending on factors like the elevation angles and installation locations of the panels. This proposed reference example can be set forth as follows:
A power generation unit comprising:
a natural energy power generator device including solar panels, the solar panels including a first solar panel disposed at a prescribed location and a second solar panel disposed at a location different from the first solar panel; and
a power supply device configured to supply an electrical device with power generated by the natural energy power generator device,
wherein the power supply device includes a panel switch mechanism configured to permit switching between a first switching mode in which both the first and second solar panels are operative and a second switching mode in which one or the other of the first and second solar panels is operative.

While preferred embodiments of the present invention have been described thus far with reference to the drawings, various additions, modifications, or omissions can be made therein without departing from the principle of the present invention and are, thus, encompassed within the scope of the present invention.

### (Reference Symbols)

1 ···· power generation unit
2 ···· structure
3 ···· wind turbine generator (natural energy power generator device)
4 ···· photovoltaic generator (natural energy power generator device)
4a ···· first solar panel
4b ···· second solar panel
5 ···· electrical device
6 ···· power supply device
11 ···· switch (panel switch mechanism)

## Claims

1. A power generation unit comprising:
solar panels including a first solar panel disposed on a portion of a structure and a second solar panel disposed on another portion of the structure or in the vicinity of the structure; and
a power supply device configured to supply an electrical device with power generated by the solar panels,
wherein the power supply device includes a panel switch mechanism configured to permit switching between a first switching mode in which both the first and second solar panels are operative and a second switching mode in which one or the other of the first and second solar panels is operative.

2. The power generation unit as claimed in claim 1, wherein the power supply device is configured to control the panel switch mechanism to carry out switching to the second switching mode, if a switching trigger condition is met on the basis of a prescribed detecting output when the power generation unit is in the first switching mode.

3. The power generation unit as claimed in claim 2, wherein the power supply device is configured to control the panel switch mechanism to carry out switching to the first switching mode, if a resuming condition is met on the basis of a prescribed detecting output when the power generation unit is in the second switching mode.

4. The power generation unit as claimed in any one of claims 1 to 3, wherein the panel switch mechanism comprises a switch configured to permit manual switching between the first and second switching modes.
